Europäisches Patentamt

European Patent Office

Office européen des brevets

(11) Numéro de publication: **0 176 440**

**A1**

(12) **DEMANDE DE BREVET EUROPEEN**

(21) Numéro de dépôt: **85401832.2**

(22) Date de dépôt: **20.09.85**

(51) Int. Cl.⁴: **H 04 B 1/04**
**H 02 H 9/04**

(30) Priorité: **25.09.84 FR 8414704**

(43) Date de publication de la demande:
**02.04.86 Bulletin 86/14**

(84) Etats contractants désignés:
**DE GB IT**

(71) Demandeur: **THOMSON-CSF**
**173, Boulevard Haussmann**
**F-75379 Paris Cedex 08(FR)**

(72) Inventeur: **Engerand, Olivier**
**Thomson-CSF SCPI 173 bld. Haussmann**
**F-75379 Paris Cedex 08(FR)**

(72) Inventeur: **Rajade, Jacques**
**Thomson-CSF SCPI 73 bld. Haussmann**
**F-75379 Paris Cedex 08(FR)**

(74) Mandataire: **Courtellemont, Alain et al,**
**THOMSON-CSF SCPI 19, avenue de Messine**
**F-75008 Paris(FR)**

(54) **Dispositif de protection pour sortie d'émetteur.**

(57) Le dispositif à insérer entre l'émetteur (5) et son antenne (A) comporte, en série dans la ligne qui relie l'antenne (A) à l'émetteur (5), un éclateur (1), un premier transformateur (3), deux diodes de protection (D1, D2) et un second transformateur (4). Le rôle des deux transformateurs est de réaliser une baisse d'impédance de ligne à l'endroit où sont insérées les diodes (D1, D2) afin d'éviter que la capacité parasite de ces diodes ne perturbe le dispositif.

Application à la protection des émetteurs principalement entre 3 et 300 MHz.

Dispositif de protection pour sortie d'émetteur.

La présente invention se rapporte à un dispositif de protection conçu pour protéger la sortie d'un émetteur contre les champs perturbateurs à niveau d'énergie important. L'invention s'applique plus particulièrement à des dispositifs destinés à protéger la sortie d'émetteurs travaillant dans le domaine des ondes décamétriques et/ou métriques, c'est-à-dire dans des fréquences comprises entre 3 et 300 MHz (bandes HF et VFH de la littérature anglo-saxonne). La sortie d'un tel émetteur se faisant par câble coaxial, le dispositif est un dispositif de protection d'une ligne coaxiale ; la protection d'une ligne coaxiale nécessite que les éléments protecteurs soient en dérivation et ne perturbent pas le fonctionnement de l'émetteur.

Des dispositifs de protection sont connus qui sont constitués par un éclateur dont les deux bornes sont respectivement couplées aux deux conducteurs du câble coaxial à protéger. Les éclateurs ont l'avantage de présenter une faible capacité mais l'inconvénient d'avoir un temps de réponse en dynamique assez long, de l'ordre de 100 nanosecondes.

Il est également connu d'utiliser des dispositifs de protection constitués de diodes Zener présentant une relativement faible capacité et une réponse rapide, comme les diodes de marque TRANSIL commercialisées par la société THOMSON-CSF. Ces diodes ont des temps de réponse très courts, de l'ordre de quelques nanosecondes, mais présentent une capacité de l'ordre de 100 picofarads ; or une telle capacité est trop importante pour une ligne coaxiale dont l'impédance caractéristique est généralement de 50 ohms.

La présente invention a pour but d'éviter ou pour le moins de réduire les inconvénients précités.

Ceci est principalement obtenu à l'aide de moyens connus, combinés de manière à compenser les inconvénients propres aux diodes Zener de protection.

Selon l'invention, un dispositif de protection pour sortie d'émetteur, comportant un premier et un second accès destinés à être couplés respectivement à une antenne et à un émetteur, est caractérisé en ce qu'il comporte un premier transformateur, ayant une fonction d'abaisseur d'impédance, dont le primaire est couplé au premier accès, deux inductances en série, un second transformateur ayant une fonction d'élévateur d'impédance, dont l'une des bornes du primaire est couplée à l'une des bornes du secondaire du premier transformateur à travers les deux inductances et dont le secondaire est couplé au second accès et deux diodes Zener montées tête-bêche entre deux points dont l'une est le point commun aux deux inductances et l'autre est couplé aux autres bornes du secondaire du premier transformateur et du primaire du second transformateur.

Il est à remarquer que le dispositif de protection qui va être décrit et revendiqué, sera considéré comme ayant son entrée et sa sortie respectivement couplées à l'antenne et à l'émetteur entre lesquels il sera interposé ; ceci est dû au fait que son rôle est un rôle de protection contre des perturbations allant de l'antenne vers l'émetteur, même s'il doit, bien évidemment, transmettre vers l'antenne les signaux produits par l'émetteur.

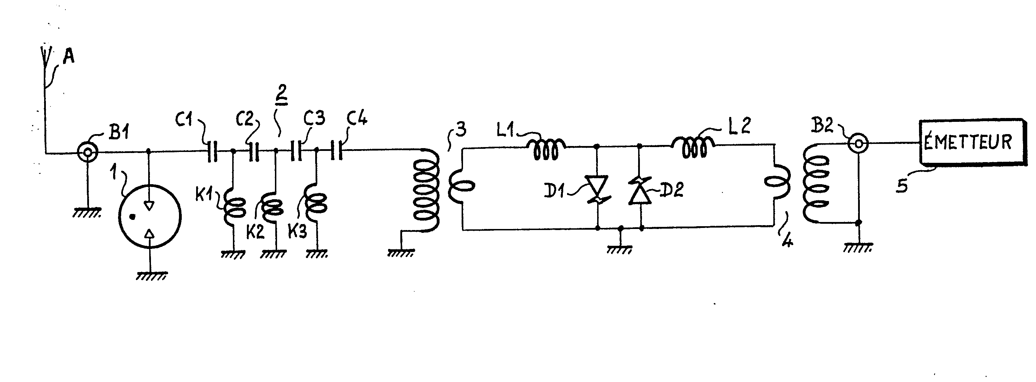

La présente invention sera mieux comprise et d'autres caractéristiques apparaîtront à l'aide de la description ci-après et de la figure s'y rapportant qui représente un dispositif de protection, selon l'invention, entre une antenne, A, et un émetteur, 5, pouvant travailler dans des bandes de fréquences comprises entre 30 et 88 MHz.

Le dispositif de protection est destiné à protéger l'émetteur, 5, contre les champs perturbateurs à fort niveau d'énergie comme, par exemple, ceux dûs à la foudre tombant au voisinage de l'antenne, A.

Le dispositif selon la figure comporte un accès B1 du type borne coaxiale dont le conducteur extérieur est relié à la masse ; cet accès sert au branchement de l'antenne et est relié, par son conducteur intérieur, d'une part à la première extrémité d'un éclateur, 1, dont la seconde extrémité est à la masse et d'autre part à l'une des armatures d'un condensateur C1. L'éclateur 1 monté à l'entrée du dispositif de protection, protège contre les tensions élevées (470 V en statique et 2000 V en dynamique) ; il est vendu sous la référence 2001-03 par la société JOSLYN ; il assure une première protection contre les perturbations électromagnétiques à fort niveau d'énergie.

Le condensateur C1 de la figure est le premier élément d'un circuit à retard, 2, du type filtre passe haut, qui comporte également trois condensateurs C2, C3, C4 et trois inductances K1, K2, K3. Les condensateurs C2, C3, C4 sont montés en série avec le condensateur C1 et les inductances K1, K2, K3 sont branchées entre la masse et, respectivement, les points communs aux résistances C1-C2, C3-C4 et C3-C4. Le circuit à retard 2 est destiné à amener un temps de retard de 100 nanosecondes.

L'armature du condensateur C4 qui n'est pas reliée au condensateur C3 est reliée à la première extrémité du primaire d'un transformateur, 3, dont la seconde extrémité du primaire est reliée à la masse. Le transformateur 3 est un transformateur à large bande, du type à câbles coaxiaux bobinés sur tores en ferrite ; il a un rapport de transformation de 4 sur 1 et forme donc un abaisseur d'impédance de manière à passer d'une impédance de 50 ohms sur son primaire à une impédance de 12,5 ohms sur son secondaire ; ce secondaire a une extrémité à la masse et une extrémité qui est reliée, par deux inductances en série, L1 et L2, à une extrémité du primaire d'un transformateur, 4, dont l'autre extrémité du primaire est à la masse. Deux diodes de protection, D1, D2, sont montées tête-bêche entre le point commun aux inductances L1, L2 et la masse, avec la cathode de la diode D1 à la masse ; ces diodes sont des diodes Zener présentant une faible capacité et une réponse rapide ; elles sont commercialisées par la société THOMSON-CSF sous le nom TRANSIL et la référence PFC6V4.

Le transformateur 4 est identique au transformateur 3 mais est branché à l'envers, c'est-à-dire qu'il fonctionne en élévateur d'impédance de rapport 4 permettant de faire une adaptation entre une impédance d'entrée de 12,5 ohms et une impédance de sortie de 50 ohms. Les deux extrémités du secondaire du transformateur 4 sont reliées respectivement aux deux conducteurs d'un accès B2, du type coaxial, dont le conducteur extérieur est à la masse ; cet accès B2 sert au branchement de l'émetteur 5.

4

Le circuit à retard 2 du dispositif qui vient d'être décrit a un temps de retard équivalent à la différence entre le temps de réponse de l'éclateur (50 nanosecondes en dynamique) et celui des diodes de protection (5 nanosecondes) la présence de ce circuit à retard a pour but de protéger les diodes de protection.

Les transformateurs 3 et 4 ont pour but de réaliser une baisse de l'impédance de ligne de 50 à 12,5 ohms à l'endroit où sont branchées les diodes de protection et d'éviter ainsi que la capacité parasite de ces diodes (environ 100 pF) ne soit trop grande vis-à-vis de l'impédance caractéristiques de la ligne.

Il est de plus à noter que la capacité parasite des diodes D1 et D2 constitue, avec les inductances L1 et L2, un filtre passe-bas qui fournit donc une protection supplémentaire de l'émetteur ; par ailleurs, et c'est là leur rôle principal, les inductances L1 et L2 constituent un diviseur de tension indispensable lorsque les diodes D1 et D2 conduisent, étant donné qu'alors la diode qui conduit se comporte comme un court-circuit.

La présente invention n'est pas limitée à l'exemple décrit ; elle s'applique en particulier au cas d'une réalisation correspondant à la figure mais sans l'éclateur 1 et le circuit à retard 2. De même le circuit à retard 2 pourrait être disposé non pas dans le primaire mais dans le secondaire du transformateur 3.

REVENDICATIONS

1. Dispositif de protection pour sortie d'émetteur, comportant un premier (B1) et un second (B2) accès destinés à être couplés respectivement à une antenne (A) et à un émetteur (5), caractérisé en ce qu'il comporte un premier transformateur (3), ayant une fonction d'abaisseur d'impédance, dont le primaire est couplé au premier accès, deux inductances en série (L1, L2), un second transformateur (4), ayant une fonction d'élévateur d'impédance, dont l'une des bornes du primaire est couplée à l'une des bornes du secondaire du premier transformateur (3) à travers les deux inductances (L1, L2) et dont le secondaire est couplé au second accès, et deux diodes Zener (D1, D2) montées tête-bêche entre deux points dont l'un est le point commun aux deux inductances et l'autre est couplé aux autres bornes du secondaire du premier transformateur (3) et du primaire du second transformateur (4).

2. Dispositif de protection selon la revendication 1, caractérisé en ce qu'il comporte un éclateur (1) dont les deux extrémités sont couplées au premier accès (B1) et un circuit à retard (2) disposé en série entre le premier accès et les deux diodes Zener (D1, D2).

3. Dispositif de protection selon la revendication 2, caractérisé en ce que le circuit à retard (2) couple le premier accès (B1) au primaire du premier transformateur (3) et est constitué par un filtre passe-haut à condensateurs (C1-C4) et inductances (K1-K3).

A

B1

C1 C2 2 C3 C4

3 L1 L2 B2

ÉMETTEUR

1 K1

K2 K3

D1 D2

4

5

Office européen
des brevets

RAPPORT DE RECHERCHE EUROPEENNE

**0176440**
Numero de la demande

EP 85 40 1832

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| Y | US-A-4 409 637 (R.R. BLOCK) <br> * Colonne 12, ligne 43 - colonne 13, ligne 32; colonne 16, ligne 44 - colonne 18, ligne 61; figures 2-4,7,7A,10-12 * | 1 | H 04 B 1/04 <br> H 02 H 9/04 |
| | --- | | |
| Y | US-A-4 363 009 (B.G. MALCOLM et al.) <br> * Colonne 4, lignes 38-48; figures 1,4 * | 1 | |
| | --- | | |
| A | NEC RESEARCH & DEVELOPMENT, no. 65, avril 1982, pages 61-67, Tokyo, JP; H. YOSHIDA et al.: "10 kW All-solid-state medium wave broadcast transmitter" <br> * Page 65, paragraphe 8; figure 14 * | 2,3 | |
| | | | DOMAINES TECHNIQUES RECHERCHES (Int. Cl.4) |
| | --- | | |
| A | EP-A-0 073 165 (THOMSON-CSF) <br> * Page 4, lignes 1-16; figures 3,4 * | 1 | H 04 B <br> H 03 G <br> H 02 H <br> H 01 Q |
| | --- | | |
| A | US-A-3 587 017 (M. KURUSU) <br> * Colonne 5, lignes 3-31; figures 6,7 * | 1 | |
| | --- | | |
| A | FR-A-1 367 697 (CHARBONNAGES DE FRANCE) <br> * Figure 1 * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 13-12-1985 | VAN WEEL E.J.G. |